# EUROPEAN PATENT SPECIFICATION

(11) **EP 2 282 241 B1**
(45) Date of publication and mention of the grant of the patent: **09.05.2012**
(21) Application number: 10170203.3
(22) Date of filing: 20.07.2010
(51) Int. Cl.: G04C 23/08, F24C 7/08, G04G 19/02, H02M 7/06

(54) **Analog clock for household appliance, in particular for oven.**
Zeigernuhr für ein Hausgerät, insbesondere für einen Backofen
Montre à aiguilles pour appareil domotique, en particulier pour un four

(30) Priority: 07.08.2009 IT MC20090183
(43) Date of publication of application: 09.02.2011
(60) Divisional application: 12159541.7
(73) Proprietor: Ers-Societa' A Responsabilita' Limitata, 60131 Ancona (IT)
(72) Inventor: Borgiani, Marco, 60131, ANCONA (AN) (IT)
(74) Representative: Baldi, Claudio

(56) References cited:
- EP-A1- 1 574 920
- EP-A2- 0 718 726
- EP-A2- 1 486 733
- US-A- 3 221 142
- US-A1- 2002 075 708
- US-A1- 2006 050 540

## Description

The present patent application for industrial invention relates to an analog clock, in particular for oven.

Kitchen ovens are normally provided with timers shaped as a knob that are actuated by the user to set the cooking time. Once the cooking time has elapsed, the timer actuates an acoustic alarm that informs the user.

Digital clocks are known with display and programming buttons that allow for displaying the current hour and setting a delayed programming.

However, it must be considered that in design "old style" kitchens a digital clock with display has a negative aesthetical impact, whereas analog clocks are much requested. Moreover, traditional old users are not very familiar with digital clocks and are quite reluctant to use programming.

These types of timers with hands have the following drawbacks:
1) they do not allow for delayed programming of the cooking cycle, unless additional hands are used in addition to the clock hands;
2) they do not allow for exact programming with 1 minute resolution of the delayed starting time of the cooking cycle (normally a third hand is used to indicate the start of the cooking cycle on the scale with maximum 12 minute resolution and maximum 11.5 hour delay).

Moreover, these types of clocks with hands have very high energy consumption and generally do not comply with the rules on energy consumption of the household appliance in stand-by mode.

EP 0 718 726 discloses a timer clock having an analogue display driven by an electric motor, providing the actual time, the cooking duration and the cooking start time, selected via function selection switches, with operating switches for setting the cooking time and the start time and switching relays for controlling the operation of the oven. The selection switches and the operating switches may be provided by a single multi-function switch.

The purpose of the present invention is to eliminate the drawbacks of the prior art by disclosing an analog clock, in particular for oven, with a good "old style" aesthetics with hands and at the same time able to implement functions to set the duration of the cooking cycle, set the start and finish time of the cooking cycle and set the minute minder function exclusively based on the hands of the clock with 1 minute resolution.

Another purpose of the present invention is to disclose such an analog clock with functions that can be intuitively implemented by the user.

Another purpose of the present invention is to disclose such an analog clock that guarantees low energy consumption when the oven in stand-by mode.

These purposes are achieved by the present invention, the features of which are claimed in the independent claim 1.

Advantageous embodiments are disclosed in the dependent claims.

Additional characteristics of the invention will become evident from the detailed description below, which refers to a merely illustrative, not limiting, embodiment, as shown in the enclosed figures, wherein:
Fig. 1 is a front view of the clock of the invention;
Fig. 2 is a rear view of the clock of Fig. 1;
Fig. 3 is a block diagram of the various components of the clock of the invention;
Fig. 4 is a detailed electrical diagram of the control system of the clock of the invention;
Fig. 4A is an enlarged view of a detail of Fig. 4, showing the power supply and the zero-crossing circuit of the clock of the invention;
Fig. 4B is an enlarged view of a detail of Fig. 4, showing the control switch of the oven and the alarm of the clock of the invention;
Fig. 4C is an enlarged view of a detail of Fig. 4, showing the buttons, icons and stepping motor of the clock of the invention.

The figures describe the clock of the invention, which is generally indicated with numeral (1).

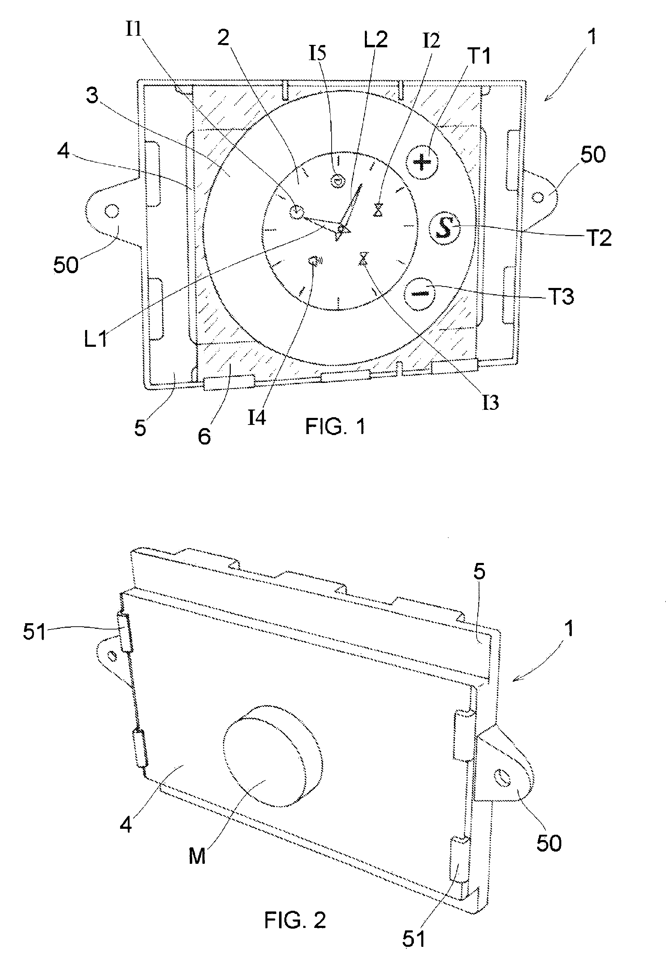

Referring to Figs. 1 and 2, the clock (1) comprises a basically disc-shaped central body (2) where an hour hand (L1) and a minute hand (L2) are mounted. The hands (L1, L2) are coupled in such a way that 360° rotation of the minute hand (L1) causes 30° rotation of the hour hand. The hands (L1, L2) are rotated by a stepping motor (M). For example, the stepping motor (M) can be connected only to the minute hand (L2) in such a way to give it 6° rotation every minute. The stepping motor (M) comprises two shafts: one for coupling of the hour hand, and one for coupling of the minute hand. The shafts of the motor (M) protrude from the back of the central body (2).

The front side of the central body (2) is provided with five icons in peripheral position: clock icon (11), switch-on icon (I2), a switch-off icon (I3), alarm icon (I4) and manual operation icon (I5).

Around the central body (2) a peripheral body (3) with toroidal shape is mounted. On the peripheral body (3) three buttons are mounted on the right-side of the central body (2): time increase button (T1), selection button (T2) and time decrease button (T3).

Behind the central body (2) and behind the peripheral body (3) a printed circuit board (4) is mounted. The circuit board (4) is provided with central hole for passage of the shafts of the stepping motor (M). The circuit board (4) is provided with the electronics that manages the operation of the clock (1), as illustrated in detail hereinafter.

The group composed of central body (2), peripheral body (3) and circuit board (4) is mounted in a plastic support (5) with rectangular shape. The support (5) has wings with slots (50) for fixing to the front panel of an oven and curved wings (51) to hold the circuit board (4).

A transparent plastic lid (6) is arranged on the front side of the support (5) in such a way to cover the central body (2) and the peripheral body (3), leaving access to buttons (T1, T2, T2) that can advantageously be of "touch" type.

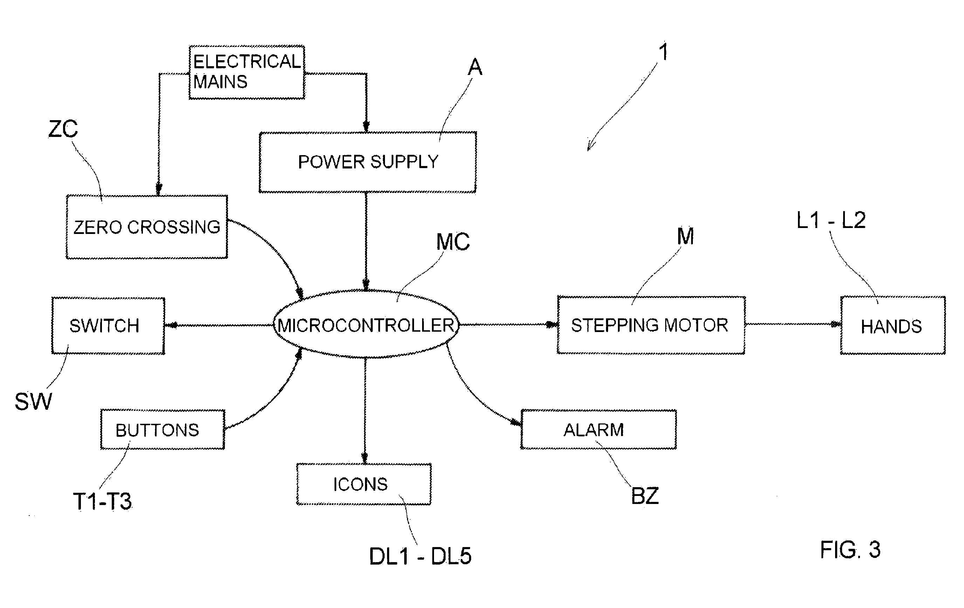

Referring to Fig. 3, the control system of the clock (1) that is implemented on the circuit board (4) is described.

On the circuit board (4) a microcontroller (MC) is mounted, being an integrated circuit, to control all the clock functions. Therefore the microcontroller (MC) is connected and controls the following devices:
- the stepping motor (M) that controls the movement of the hands (L1, L2),
- an acoustic alarm (BZ), such as for example a buzzer,
- five LEDs (DL1 - DL5) respectively arranged under the five icons (L1 - L5) to light them up, and
- a switch (SW) that controls the switch on and off of the oven.

The buttons (T1-T3) are connected to the microcontroller (MC) to set the various functions of the clock. In particular, button (T1) controls the clockwise rotation of the minute hand (L2), button (T3) controls the anticlockwise rotation of the minute hand (L2) and button (T2) controls the switch on of the LEDs (L1-L5) and consequently the actuation of the various programming and operation settings of the clock.

The clock (1) must be powered from the mains, that is to say with 230/240 Vac voltage in alternate current with 50/60 Hz frequency.

To that end, the microcontroller (MC) is connected to a zero-crossing device (ZC) and a power supply (A). The zero-crossing device (ZC) detects the moment when the alternating current of the mains crosses zero. The power supply (A) takes the alternating current from the mains to power the microcontroller (MC) and the devices connected to it. The power supply (A) implements an energy saving function that guarantees minimum consumption in stand-by mode of the household appliance, which is lower than 0.5 Watt.

Referring to Figs. 1 and 3 the operation of the clock (1) is described.

In stand-by mode the clock (1) operates only as a normal clock, indicating the current time. The stepping motor (M) is powered by the microcontroller (MC) with suitable current impulses with exactly 1/60 Hz frequency. Therefore, every minute the minute hand (L2) makes a 6° rotation that is equal to one minute on the front side of the central body (2).

The user wants to program a delayed cooking time (for example, it is 9:00 and wants to program cooking from 11:00 to 12:00).

The user pushes the button (T2) to select switch-on until the switch-on icon (I2) is turned on. With button (T1) the user moves the hands (L1, L2) until 11:00. With button (T2) the user confirms the switch-on time and consequently the switch-off icon (13) starts flashing.

Then, with button (T1) the user moves the hands (L1, L2) until 12:00. With button (T2) the user confirms the switch-off time and consequently the switch-off icon (I3) is turned off and the alarm icon (I4) is turned on. In fact, the alarm is set by default and the user can press button (T2) to deactivate it.

Now the hands (L1, L2) go back to the current time that is stored in the microcontroller (MC) and the clock (1) continues on operating as a normal clock.

In any case, the microcontroller (MC) stores the switch-on time (11:00) and the switch-off time (12:00) for actuation of the switch (SW).

When the hands (L1, L2) reach 11:00, the microcontroller (MC) controls the switch (SW) that closes to switch on the oven. When the hands (L1, L2) reach 12:00, the microcontroller (MC) controls the switch (SW) that opens to switch off the oven. Simultaneously, the microcontroller (MC) activates the alarm (BZ) that starts buzzing, if not deactivated.

Moreover, whenever the user requires it, the clock can display the cooking program by moving the hands (L1 and L2) to the switch-on time and making the switch-on icon (12) flash, then moving the hands (L1 and L2) to the switch-off time and making the switch-off icon (13) flash and finally replacing the hands (L1, L2) on the current time.

Therefore the hardware of the microcontrollers (MC) comprises:
- means to save the switch-on time identified by the hands (L1, L2) moved by the user with the buttons (T1, T3),
- means to save the switch-off time identified by the hands (L1, L2) moved by the user with the buttons (T1, T3), and
- means to save the current time so that the hands (L1, L2) are brought back to the current time after setting the switch-on and the switch-off time.

The clock (1) also provides for starting the cooking cycle immediately, for a programmed duration, by simply skipping the programming of the switch-on time and passing immediately to programming the switch-off time.

The clock also provides for a manual cooking function that allows the user to start and end cooking manually. The user presses button (T2) until the manual icon (15) starts flashing and presses once either button (T1) or button (T3) to start cooking. To end cooking, the user must simply repeat the aforesaid operation.

The clock also provides for a minute minder function that allows for programming only the acoustic alarm (BZ) without closing the switch (SW). The user presses button (T2) several times until the switch-off icon (I4) starts flashing, then presses buttons (T1, T3) to set the alarm time and confirms with button (T2). After setting, the hands go back to the current time.

The clock (1) provides, of course, for the clock function. The user presses button (T2) until the clock icon (11) starts flashing and sets the time of the clock with buttons (T1, T3).

It must be noted that the clock (1) of the invention only uses the hands (L1, L2) of the clock to perform the cooking programming, without using additional hands or display that negatively affect the aesthetics of the clock and complicate user programming.

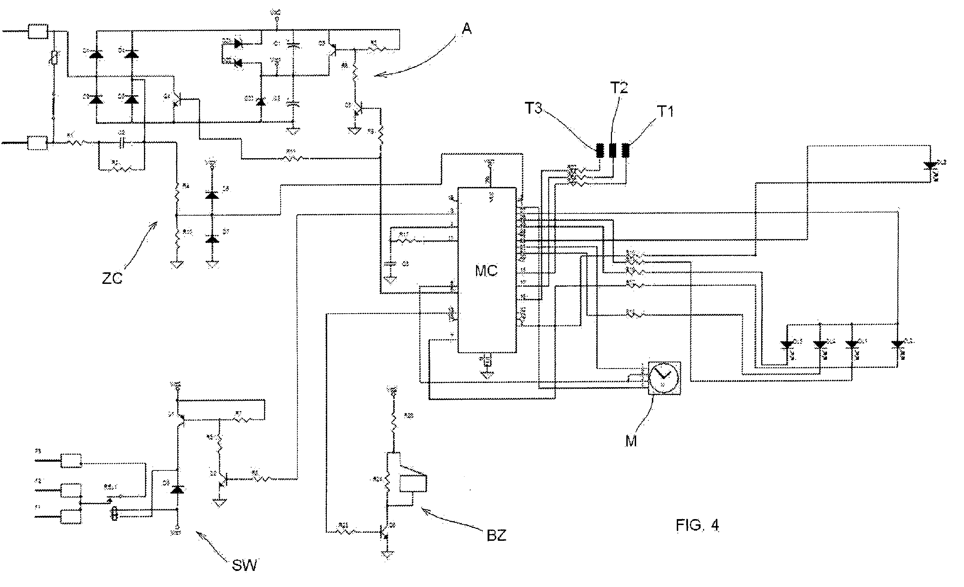

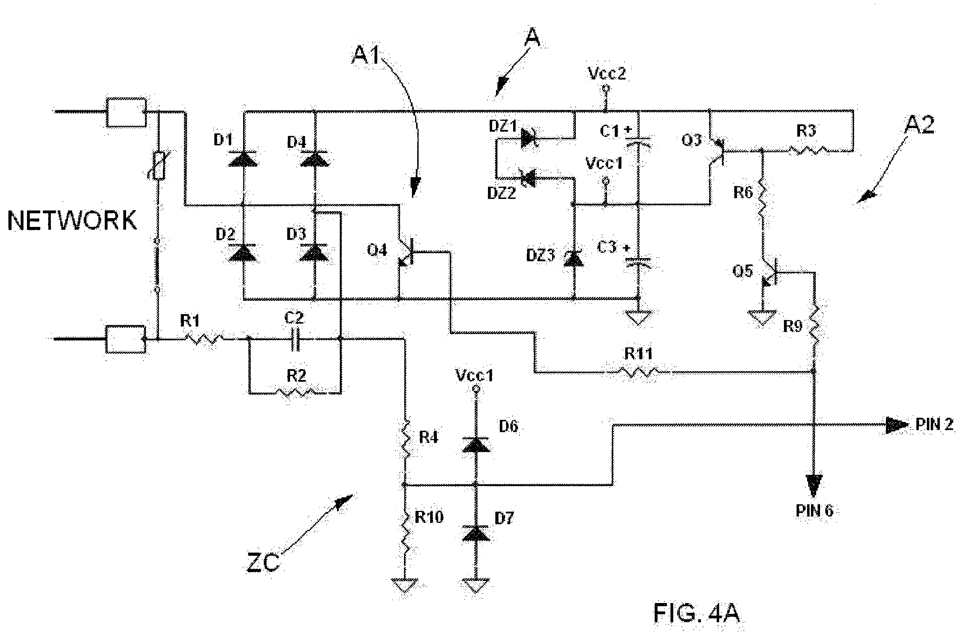

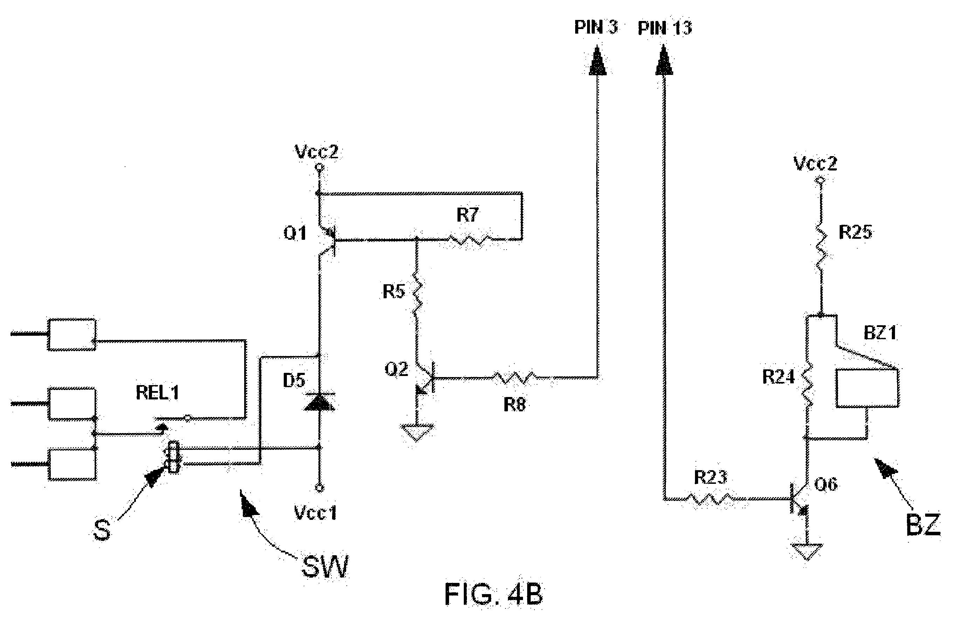

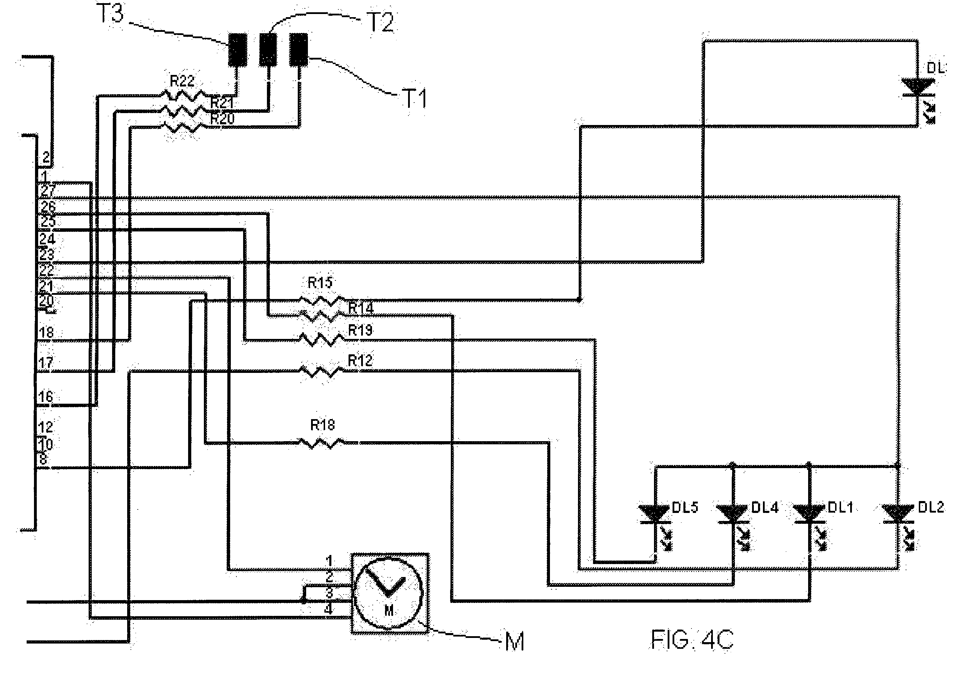

Referring to Figs. 4, 4A, 4B, and 4C the implementation of the electronic circuits of the clock (1) is described.

Referring to Fig. 4, the microcontroller (MC) is a 28-pin integrated circuit that has been especially programmed to perform the functions of the clock (1).

Referring to Fig. 4A, the zero-crossing detection circuit (ZC) is of known type and comprises two resistances (R4, R10) and two diodes (D6, D7). The zero-crossing circuit is connected to pin 2 of the microcontroller (MC).

The power supply section (A) comprises two capacitors in series (C3, C1) in such a way to define a first voltage point (Vcc1) at 5.1 V and a second voltage point (Vcc2) at 29.1 V.

The power supply (A) with lowest output voltage (Vcc1) at 5.1 V is connected to pin 28 of the microcontroller (MC) (Fig. 4).

The power supply (A) comprises a diode bridge rectifier (D1 - D4), a first section (A1) and a second section (A2).

The rectifier (D1 - D4) rectifies the mains sinusoidal current in such a way to generate a full-wave supply voltage.

The first section (A1) comprises a transistor (Q4) that is activated during the stand-by mode of the appliance, with control of the microcontroller (MC) by means of pin 6 to reduce Watt consumption.

The first section (A1) transforms the full-wave supply voltage into half-wave supply voltage, bringing the transistor (Q4) to conduction.

The transistor (Q4) of the first section (A1) is an npn transistor and the diode (D2) of the rectifier is connected between collector and emitter of the transistor (Q4). So, the transistor (Q4) is in conduction (ON) when its base pin is brought to conduction voltage (Vcc1) by means of pin 6 of the microcontroller (MC). In this way the transistor (Q4) short-circuits the diode (D2) of the rectifier and activates the half-wave supply voltage, reducing Watt consumption to approximately one half with respect to full operation.

The second section (A2) comprises a transistor (Q3) that, likewise the first section (A1), is activated in stand-by mode, with the same control of the microcontroller by means of pin 6 to further reduce Watt consumption. In fact, the second section (A2) short-circuits the second voltage point (Vcc2) bringing the transistor (Q3) in conduction.

The transistor (Q3) of the second section (A2) is a pnp transistor and is in conduction (ON) when its base pin is brought to conduction voltage. The base of the transistor (Q3) is connected to the collector of an npn transistor (Q5), the base of which is connected to pin 6 of the microcontroller.

The capacitor (C1) is connected between emitter and collector of the transistor (Q3). Two Zener diodes (DZ1 and DZ2) are connected in parallel to the capacitor (C1).

Therefore the transistor (Q3) is in conduction when the npn transistor (Q5) is in conduction and this happens when its base pin is brought to conduction voltage (Vcc1) by means of pin 6 of the microcontroller (MC).

When the transistors (Q5) and (Q3) are in conduction, the diodes (DZ1, DZ2) and the capacitor (C1) are short-circuited, deactivating the voltage point (Vcc2) (in this case the latter will have a voltage that almost coincides with voltage point Vcc1) and reducing Watt consumption to approximately Vcc1/Vcc2 with respect to full operation.

The contributions of power reduction of the first section (A1) and the second section (A2) are multiplied, reducing Watt consumption to approximately ½ * Vcc1 / Vcc2 with respect to full operation.

Instead, when the clock is not in stand-by mode, the transistor (Q3) and the transistor (Q4) are disabled (OFF), thus allowing for the necessary current and voltage for actuation of the devices connected to the microcontroller (MC).

The implementation of the power supply (A) allows for reducing consumption of the clock in stand-by mode to power lower than 0.5 Watt, by suitably dimensioning the power supply circuit. In fact, the stepping motor (M) is only powered every minute, and not constantly, that is to say when it needs electrical power to move the hands.

Referring to Fig. 4B, the switch (SW) is of traditional type, normally used to control an electrical heating element of an oven, and possible fan and light. The switch (SW) comprises a solenoid inductance (S) that controls a relay (REL1). The circuit of the switch is connected to pin 3 of the microcontroller.

The alarm (BZ) is a buzzer of known type and is connected to pin 13 of the microcontroller.

Referring to Fig. 4C, the buttons (T1, T2, T3) are of "touch" type and are connected by means of corresponding resistances (R20, R21, R22) respectively to pins (18, 17 and 16) of the microcontroller (MC).

The LEDs (DL1 - DL5) of the icons are connected by means of resistances to corresponding pins of the microcontroller.

The stepping motor (M) has four pins (1, 2, 3, 4) that are connected to corresponding pins (22, 5, 1) of the microcontroller (MC).

Numerous variations and modifications can be made to the present embodiment of the invention by an expert of the art, while still falling within the scope of the invention as claimed in the enclosed claims.

## Claims

1. Clock (1) for household appliance comprising:
- hands (L1, L2) to tell the time,
- a stepping motor (M) to actuate said hands,
- icons (I1-I5) configured to indicate clock functions,
- a switch (SW) configured to control the switch-on/off of the appliance according to a time period set by the user,
- a microcontroller (MC) connected to the stepping motor (M), icons (I1-I5) and switch (SW) and configured to control the operation of these devices,
- buttons (T1, T2, T3) connected to the microcontroller (MC) and configured to be actuated by the user to select and control the clock functions, and
- a power supply (A) connected to the mains to power said microcontroller (MC),
wherein
said microcontroller (MC) comprises:
- means configured to save the switch-on time of the appliance identified by the hands (L1, L2) moved by the user with the buttons (T1, T3),
- means configured to save the switch-off time of the appliance identified by the hands (L1, L2) moved by the user with the buttons (T1, T3), and
- means configured to save the current time so that the hands (L1, L2) are brought back to the current time after setting the switch-on/off time of the appliance and
wherein the hands (L1, L2) only comprise two hands, an hour hand (L1) and a minute hand (L1), configured to perform all programming operations of the clock; and said buttons only comprise three buttons:
- a time increase button (T1) configured in such a way that, when touched by the user, it determines a clockwise rotation of the minute hand (L2),
- a time decrease button (T3) configured in such a way that, when touched by the user, it determines an anticlockwise rotation of the minute hand (L2), and
- a selection button (T2) configured in such a way that, when touched by the user, it selects a clock function, displaying one of the icons (I1-I5).

2. Clock (1) as claimed in claim 1, wherein said icons comprise at least three icons:
- a switch-on icon (I2) to set the switch-on time of the appliance,
- a switch-off icon (I3) to set the switch-off time of the appliance, and
- a clock icon (I1) to set a time setting mode of the clock.

3. Clock (1) as claimed in any one of the preceding claims, wherein said clock comprises an acoustic alarm (BZ) connected to said microcontroller (MC) that is triggered after the time set from the switch-on to the switch-off of the appliance has elapsed.

4. Clock (1) as claimed in claim 3, wherein said icons comprise an alarm icon (I4) that can be selected or deselected with the selection button (T2) to activate/deactivate said acoustic alarm (BZ).

5. Clock (1) as claimed in any one of the preceding claims, wherein said clock comprises a manual setting icon (15) that can be selected with the selection button (T2) to start and end a cooking cycle manually.

6. Clock (1) as claimed in any one of the preceding claims, further comprising a zero-crossing detection circuit (ZC) connected to the mains and to the microcontroller (MC) to detect the moment when the sinusoid of the mains alternating current crosses zero.

7. Clock (1) according to any one of the above claims, wherein said power supply (A) comprises:
- a rectifier (D1-D4) to rectify the mains alternating current in order to obtain full-wave supply voltage,
- a first section (A1) for reduction of consumption in Watts, adapted to switch from full-wave supply voltage to single half wave supply voltage when the devices connected to the microcontroller (MC) must not be actuated,
- a first supply voltage (Vcc1),
- a second supply voltage (Vcc2) higher than the first supply voltage (Vcc1), and
- a second section (A2) for reduction of consumption in Watts, adapted to deactivate the second supply voltage (Vcc2) when the devices using said voltage must not be actuated.

8. Clock (1) as claimed in claim 7, wherein said second section (A2) comprises two capacitors (C3, C1) to define said first voltage (Vcc1) and said second voltage (Vcc2) higher than the first voltage and two transistors (Q3, Q5) that activate the second voltage (Vcc2) when the appliance is not in stand-by mode and vice versa deactivate the second voltage (Vcc2) when the appliance is in stand-by mode.

9. Clock (1) as claimed in claim 7 or 8, wherein the first supply section (A1) comprises a transistor (Q4) with base connected to said microcontroller (MC) and collector and emitter connected to a diode of said rectifier (D1 - D4) to activate said full-wave supply voltage when the appliance is not in stand-by mode and vice versa activate said half wave supply voltage when the appliance is in stand-by mode.

## Patentansprüche

1. Uhr für Haushaltselektrogeräte, umfassend:
- Zeiger (L1, L2) zum Anzeigen der Stunde,
- einen Schrittmotor (M) zum Antreiben der Zeiger,
- Symbole (I1-I5), die entsprechend gestaltet sind, um die Uhrfunktionen anzuzeigen,
- einen Schalter (SW), der entsprechend gestaltet ist, um die Einschaltung/Ausschaltung des Haushaltselektrogeräts in Übereinstimmung mit einem vom Benutzer eingestellten Zeitraum zu steuern,
- einen Mikrocontroller (MC), der an den Schrittmotor (M), an die Symbole (I1-I5) und an den Schalter (SW) angeschlossen und entsprechend gestaltet ist, um den Betrieb dieser Vorrichtungen zu steuern,
- Tasten (T1, T2, T3), die an den Mikrocontroller (MC) angeschlossen und vom Benutzer betätigt werden können, um die Funktionen der Uhr zu steuern, und
- ein Netzteil (A), das an das Stromnetz angeschlossen ist, um den Mikrocontroller (MC) zu speisen,
wobei
der Mikrocontroller (MC) Folgendes umfasst:
- Mittel, die entsprechend gestaltet sind, um die Einschaltzeit des Haushaltselektrogeräts zu speichern, die von den Zeigern (L1, L2) festgelegt wird, die vom Benutzer mittels der Tasten (T1, T3) verstellt werden,
- Mittel, die entsprechend gestaltet sind, um die Ausschaltzeit des Haushaltselektrogeräts zu speichern, die von den Zeigern (L1, L2) festgelegt wird, die vom Benutzer mittels der Tasten (T1, T3) verstellt werden,
- Mittel, die entsprechend gestaltet sind, um die aktuelle Uhrzeit zu speichern, damit die Zeiger (L1, L2) auf die aktuelle Uhrzeit zurückgestellt werden, nachdem die Einschaltzeit und Ausschaltzeit des Haushaltselektrogeräts eingestellt wurden, und
wobei die Zeiger (L1, L2) nur zwei Zeiger umfassen; einen Stundenzeiger (L1) und einen Minutenzeiger (L1), die entsprechend gestaltet sind, um alle Einstellungen der Uhr vorzunehmen; und wobei die Tasten nur drei Tasten umfassen:
- eine Taste zum Erhöhen der Uhrzeit (T1), die entsprechend gestaltet ist, dass sich bei ihrem Antippen der Minutenzeiger (L2) im Uhrzeigersinn dreht,
- eine Taste zum Vermindern der Uhrzeit (T3), die entsprechend gestaltet ist, dass sich bei ihrem Antippen der Minutenzeiger (L2) im Gegenuhrzeigersinn dreht, und
- eine Wähltaste (T2), die entsprechend gestaltet ist, dass bei ihrem Antippen eine Funktion der Uhr gewählt wird, wobei eines der Symbole (I1-I5) angezeigt wird.

2. Uhr (1) nach Anspruch 1, wobei die Symbole mindestens drei Symbole umfassen:
- ein Einschaltsymbol (I2), um die Einschaltzeit des Haushaltselektrogeräts einzustellen,
- ein Ausschaltsymbol (I3), um die Ausschaltzeit des Haushaltselektrogeräts einzustellen,
- ein Uhrzeitsymbol (I1), um einen Modus zur Einstellung der Uhrzeit der Uhr einzustellen.

3. Uhr (1) nach einem beliebigen der vorstehenden Ansprüche, wobei die Uhr einen akustischen Alarm (BZ) umfasst, der an den Mikrocontroller (MC) angeschlossen ist, der erregt wird, nachdem der von der Einschaltung bis zur Ausschaltung des Haushaltselektrogeräts eingestellte Zeitraum abgelaufen ist.

4. Uhr (1) nach Anspruch 3, wobei die Symbole ein Alarmsymbol (I4) umfassen, das mittels der Wähltaste (T2) angewählt/abgewählt werden kann, um den akustischen Alarm (BZ) anzuwählen/abzuwählen.

5. Uhr (1) nach einem beliebigen der vorstehenden Ansprüche, wobei die Uhr ein Symbol zur manuellen Einstellung (I5) umfasst, das mittels der Wähltaste (T2) angewählt werden kann, um einen Kochvorgang manuell zu starten und zu beenden.

6. Uhr (1) nach einem beliebigen der vorstehenden Ansprüche, umfassend ferner eine Nulldurchgang-Erkennungseinheit (ZC), die an das Stromnetz und an den Mikrocontroller (MC) angeschlossen ist, um den Nulldurchgang der sinusförmigen Netzwechselspannung zu erkennen.

7. Uhr (1) nach einem beliebigen der vorstehenden Ansprüche, wobei das Netzteil (A) Folgendes umfasst:
- einen Gleichrichter (D1-D4) zum Gleichrichten der Netzwechselspannung, um eine doppelte Halbwellennetzspannung zu erhalten,
- einen ersten Abschnitt (A1) zur Verminderung des Watt-Verbrauchs, dazu eingerichtet, um die "doppelte Halbwellen"-Netzspannung in eine "einzelne Halbwellen"-Netzspannung umzuwandeln, wenn die an den Mikrocontroller (MC) angeschlossenen Vorrichtungen nicht betätigt werden müssen,
- eine erste Netzspannung (Vcc1),
- eine zweite Netzspannung (Vcc2), die höher als die erste Netzspannung (Vcc1) ist, und
- einen zweiten Abschnitt (A2) zur Verminderung des Watt-Verbrauchs, dazu eingerichtet, die zweite Netzspannung (Vcc2) zu deaktivieren, wenn die Vorrichtungen, die diese Spannung verwenden, nicht betätigt werden müssen.

8. Uhr (1) nach Anspruch 7, wobei der zweite Netzabschnitt (A2) zwei Kondensatoren (C3, C1) umfasst, um die erste Spannung (Vcc1) und die zweite Spannung (Vcc2) festzulegen, die höher als die erste Spannung ist, und zwei Transistoren (Q3, Q5), die die zweite Spannung (Vcc2) aktivieren, wenn das Haushaltselektrogerät sich nicht im Stand-by-Modus befindet und die umgekehrt die zweite Spannung (Vcc2) deaktivieren, wenn das Haushaltselektrogerät sich im Stand-by-Modus befindet.

9. Uhr (1) nach Anspruch 7 oder 8, wobei der erste Netzabschnitt (A1) einen Transistor (Q4) umfasst, dessen Basis an den Mikrocontroller (MC) angeschlossen ist und dessen Kollektor und Emitter an eine Diode des Gleichrichters (D1 - D4) angeschlossen sind, um die "doppelte Halbwellen"-Netzspannung zu aktivieren, wenn das Haushaltselektrogerät sich nicht im Stand-by-Modus befindet, bzw. um die "einzelne Halbwellen"-Netzspannung zu aktivieren, wenn das Haushaltselektrogerät sich im Stand-by-Modus befindet.

## Revendications

1. Horloge (1) pour électroménager comprenant :
- des aiguilles (L1, L2) pour indiquer l'heure,
- un moteur pas à pas (M) pour actionner les dites aiguilles,
- des icônes (I1-I5) configurées pour indiquer les fonctions de l'horloge,
- un interrupteur (SW) configuré pour contrôler la mise sous tension/hors tension de l'électroménager, en fonction d'une période de temps programmée par l'utilisateur,
- un microcontrôleur (MC) connecté au moteur pas à pas (M), aux icônes (I1-I5) et à l'interrupteur (SW), configuré pour contrôler le fonctionnement des dits dispositifs,
- des poussoirs (T1, T2, T3) connectés au microcontrôleur (MC), que l'utilisateur peut actionner pour sélectionner et contrôler les fonctions de l'horloge, et
- une alimentation (A) connectée au réseau électrique pour alimenter le dit microcontrôleur (MC),
où
le dit microcontrôleur (MC) comprend :
- des moyens configurés pour mémoriser l'heure de mise sous tension de l'électroménager, l'heure étant identifiée par les aiguilles (L1, L2) programmées par l'utilisateur moyennant les poussoirs (T1, T3),
- des moyens configurés pour mémoriser l'heure de mise hors tension de l'électroménager, l'heure étant identifiée par les aiguilles (L1, L2) programmées par l'utilisateur au moyen des poussoirs (T1, T3), et
- des moyens configurés pour sélectionner l'heure en cours, de manière que les aiguilles (L1, L2) se repositionnent sur l'heure en cours après avoir programmé l'horaire de mise sous tension/hors tension de l'électroménager, et
où les aiguilles (L1, L2) comprennent uniquement deux aiguilles, une aiguille des heures (L1) et une aiguille des minutes (L1), configurées pour effectuer toutes les programmations de l'horloge , et les dits poussoirs comprennent seulement trois poussoirs :
- un poussoir pour augmenter l'heure (T1), configuré de manière que, lorsqu'appuyé par l'utilisateur pour la programmation, il provoque une rotation de l'aiguille des minutes (L2) dans le sens des aiguilles d'une montre,
- un poussoir pour diminuer l'heure (T3), configuré de manière que, lorsqu'appuyé par l'utilisateur pour la programmation, il provoque une rotation de l'aiguille des minutes (L2) dans le sens contraire des aiguilles d'une montre, et
- un poussoir de sélection (T2) configuré de manière que, lorsqu'appuyé par l'utilisateur pour la programmation, il sélectionne une fonction de l'horloge, en visualisant l'une des dites icônes (I1-I5).

2. Horloge (1) selon la revendication 1, où les dites icônes comprennent au moins trois icônes :
- une icône de mise sous tension (I2) pour programmer l'heure de démarrage de l'électroménager,
- une icône de mise hors tension (I3) pour programmer l'heure de la fin de la programmation de l'électroménager, et
- une icône d'horloge (I1) pour programmer un mode de réglage de l'heure de l'horloge.

3. Horloge (1) selon l'une quelconque des revendications précédentes, où dite horloge comprend une alarme acoustique (BZ) connectée au dit microcontrôleur (MC) qui s'active lorsque échoit la période programmée à compter de la mise sous tension jusqu'à la mise hors tension de l'électroménager.

4. Horloge (1) selon la revendication 3, où les dites icônes comprennent une icône d'alarme (I4) qui peut être sélectionnée ou désélectionnée moyennant le poussoir de sélection (T2) pour activer/désactiver dite alarme acoustique (BZ).

5. Horloge (1) selon l'une quelconque des revendications précédentes, où dite horloge comprend une icône de programmation manuelle (I5) que l'on peut sélectionner moyennant le poussoir de sélection (T2), pour commencer et terminer manuellement une cuisson.

6. Horloge (1) selon l'une quelconque des revendications précédentes, comprenant en outre un circuit de détection de passage par zéro (ZC) connecté au réseau électrique et au dit microcontrôleur (MC) pour détecter lorsque la sinusoïde du courant alternatif de réseau passe par le zéro.

7. Horloge (1) selon l'une quelconque des revendications précédentes, où la dite alimentation (A) comprend :
- un redresseur (D1-D4) pour redresser le courant alternatif de réseau, de manière à obtenir une tension d'alimentation à deux alternances,
- une première section (A1) pour la réduction de la consommation en Watt, apte à commuter la tension d'alimentation à deux alternances en tension d'alimentation à simple alternance, lorsque les dispositifs connectés au microcontrôleur (MC) ne doivent pas être activés,
- une première tension d'alimentation (Vcc1),
- une seconde tension d'alimentation (Vcc2), plus élevée par rapport à la première tension d'alimentation (Vcc1), et
- une seconde section (A2) pour la réduction de la consommation en Watt, apte à désactiver la seconde tension d'alimentation (Vcc2), lorsque les dispositifs qui utilisent cette tension ne doivent pas être activés.

8. Horloge (1) selon la revendication 7, où la dite seconde section (A2) d'alimentation comprend deux condensateurs (C3, C1) de manière à définir dite première tension (Vcc1) et dite seconde tension (Vcc2) majeure de la première tension et deux transistors (Q3, Q5) qui activent la seconde tension (Vcc2), lorsque l'électroménager n'est pas en veille et qui, vice-versa, activent la seconde tension (Vcc2) lorsque l'électroménager est en veille.

9. Horloge (1) selon la revendication 7 ou 8, où la dite première section (A1) d'alimentation comprend un transistor (Q4) dont la base est connectée au dit microcontrôleur (MC) et le collecteur et l'émetteur sont connectés à une diode du dit redresseur (D1 - D4), de manière à activer la dite tension d'alimentation à deux alternances lorsque l'électroménager est en veille.
